(19) Europäisches Patentamt
European Patent Office
Office européen des brevets

(11) Publication number: **0 659 022 A2**

# (12) EUROPEAN PATENT APPLICATION

(21) Application number: **94203626.0**

(51) Int. Cl.$^6$: **H04N 7/26**, H04N 7/36

(22) Date of filing: **14.12.94**

(30) Priority: **18.12.93 GB 9325914**

(43) Date of publication of application:
**21.06.95 Bulletin 95/25**

(84) Designated Contracting States:
**AT BE CH DE DK ES FR GB GR IE IT LI LU MC NL PT SE**

(71) Applicant: **KODAK LIMITED**
**Headstone Drive**
**Harrow,**
**Middlesex HA1 4TY (GB)**
(84) **GB**

(71) Applicant: **EASTMAN KODAK COMPANY**
**343 State Street**
**Rochester,**
**New York 14650-2201 (US)**
(84) **BE CH DE DK ES FR GR IE IT LI LU MC NL PT SE AT**

(72) Inventor: **Loveridge, Jennifer Clare, c/o Kodak Limited**
**Patent Department,**
**Headstone Drive**
**Harrow,**
**Middlesex, HA1 4TY (GB)**

(74) Representative: **Phillips, Margaret Dawn et al**
**Kodak Limited**
**Patent Department**
**Headstone Drive**
**Harrow,**
**Middlesex HA1 4TY (GB)**

## (54) Detection of global translations between images.

(57) Described herein is a method to detect global displacements between pairs of images to sub-pixel accuracy using a vernier approach in which a global displacement vector is obtained to pixel accuracy using phase correlation techniques and a fractional correction is obtained using a spatial-domain matching technique, such as cross-correlation.

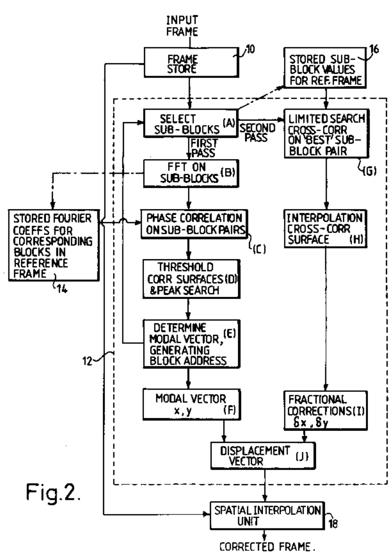

Fig.2.

EP 0 659 022 A2

## Field of the Invention

The present invention relates to the detection of global translations between images and is more particularly concerned with a digital processing method for such detection to sub-pixel accuracy between images which are related either temporally or spatially.

## Background of the Invention

Images may, for example, comprise part or all of a time-varying sequence, or the colour separations of a single image. Typical applications for the method of the present invention include the automatic detection and correction, to high accuracy, of spatial unsteadiness occurring in a time-varying sequence of images which have originated from motion picture film, the automatic alignment of pairs of images of the same subject taken at different times, and the automatic registration of colour separations of a single image.

There are two classes of algorithms by which spatial translation can be measured, the first relating to the use of non-image information, for example, the position of sprocket holes or the frame edge or the use of fiducial marks, and the second depending on the use of the information content within the image The second class of algorithms can be referred to as 'motion estimation' algorithms. The present invention belongs to this second class.

Motion estimation algorithms have the advantage of versatility in this particular application. They can be implemented on any image set independent of its source or history.

Motion estimation algorithms may be broadly divided into three types:-

1. Block matching algorithms.

These are described in "*A Hardware Motion Compensator for a Videoconferencing Codec*", I Parke and D G Morrison, and "*Motion–compensated Field Rate Conversion for HDTV Display*", G M X Fernando, both from IEEE Colloquium "Motion Compensated Image Processing", Digest 1987/86, and "*The Development of an HDTV to PAL Standards Converter*", T Ohmura, IBC86 Conference Proceedings, pages 221 to 224.

In this method, the matching is implemented in the spatial domain, based on either maximum cross-correlation or minimum mean square error. The method is amenable to efficient hardware implementation by the application of hierarchical searching techniques.

2. Spatio-temporal constraint or gradient matching algorithms.

These are described in "*Motion Estimation for Frame–rate Conversion*", E A Krause, MIT PhD Thesis, ATRP-T-70 (1987).

The method used here is based on the assumption that movement occurs along paths of constant luminance. Thus, if luminance, ***L***, is a function of spatial position, (***x,y***) and time, ***t***, it is required that:-

$$\frac{dL}{dt}(x(t), y(t), t) = 0$$

Expanding this, and neglecting higher order terms yields:

$$\frac{\partial L}{\partial x}\frac{dx}{dt} + \frac{\partial L}{\partial y}\frac{dy}{dt} + \frac{\partial L}{\partial t} = 0$$

Estimates for

$$\frac{dx}{dt}$$

and

$$\frac{dy}{dt}$$

may be obtained by placing constraints on the smoothness of the image flow, both spatially and temporally. Typically, the spatial and temporal gradients of the luminance signal are approximated from the output from local spatial high-pass filtering and the inter frame difference of corresponding pixel values respectively. This is described in "*Methods for Measuring Small Displacements of Television Images*", C Cafforio et al, IEEE Transactions on Information Theory, IT-22, 5, 573-579 (1976).

3. Phase correlation algorithms.

These are described in "*TV Picture Motion Measurement*", G A Thomas, WO-A-87/05769 and "*Cine Unsteadiness in Video Signal Correction*", K L Minakovic, GB-A-2 187 913.

Phase correlation is based in the principle that x-y translations in the spatial domain correspond to phase shifts in the Fourier domain. The phase shift at each frequency may be calculated as follows:-

$$\Delta\Phi(u,v) = \frac{F(u,v).G(u,v)^*}{|F(u,v).G(u,v)^*|}$$

where ***F*** and ***G*** are the two-dimensional Fourier transforms of blocks ***f,g*** in corresponding positions from neighbouring frames in the input sequence, or from colour separations of the same image. The inverse transform of $\Delta\Phi(\boldsymbol{u},\boldsymbol{v})$ generates a correlation surface which contains spikes (more precisely, sinc functions which result from the effective window in the Fourier domain) at positions corresponding to an x-y displacement, and where the height of the spikes is related to the number of pixels within the block which have moved with that displacement.

**Problem to be solved by the Invention**

Methods utilising block matching algorithms as discussed above are not suitable for reliable measurement of displacement or translation to sub-pixel accuracy.

The method used in spatio-temporal constraint or gradient matching algorithms is robust in generating vectors of sub-pixel accuracy only where the displacement is small - for example, of the order of one pixel. The principles which underpin this method render it suitable for the generation of motion vectors on a local (pixel by pixel) rather than a global (block by block) basis. Hence motion estimation techniques based on the assumptions of optical flow are not appropriate for the detection of global translations.

Phase correlation can be demonstrated to be extremely robust in the presence of frame-independent noise (which is spread across the entire correlation surface), and independent movement within the scene (which generally manifests itself as low-amplitude independent spikes in the correlation surface which can be separated without adverse effect on the spike corresponding to a global displacement).

In principle, therefore, phase correlation appears to be the most suitable approach to estimate displacements where a single global vector is required per frame.

However, phase correlation yields a correlation surface which is sampled at the sampling rate of the input data, and hence, in its simplest form, generates vectors to pixel accuracy. It is possible to perform a two-dimensional interpolation over the correlation surface in an attempt either to reconstruct a continuous correlation surface and subsequently to estimate the position of the peak to sub-pixel accuracy, or in a single step, to estimate the corresponding position of a peak in an equivalent continuous surface.

It can be shown, however, that errors exist in the reconstructed surface due to edge effects and spectral leakage.

In the former case, blocks are selected from the pair of images at corresponding pixel positions. As a consequence of the global displacement between the image pair, corresponding blocks contain picture information from slightly different areas of the image.

In the latter case, the signals input to the phase correlation are sampled, hence the phase-difference signals in the Fourier domain are repeated centred around multiples of the sampling frequency. If these 'repeat spectra' are filtered out using a window with a cut-off frequency at the input nyquist frequency, then the inverse transform of the window is effectively convolved with the sampled correlation surface. Alternatively, if the phase-difference signal with 'repeat spectra', and hence the discontinuities which occur at the nyquist frequency, is inverse transformed, these discontinuities produce errors in the correlation surface. As a result of these errors in the reconstructed surface, displacement vectors are generated which are only accurate to around 0.5 of a pixel.

Several methods have been proposed to improve this accuracy. For example, using the phase correlation algorithm discussed above, the Fourier domain can be padded with '0's before the inverse transform, to effect a sinc function interpolation in the spatial domain. However, this results in objectionable ringing in the spatial domain which may be reduced by windowing techniques, but the overall computational complexity of the method is high.

## Summary of the Invention

It is therefore an object of the present invention to provide a comparatively simple method to extend the phase correlation technique to generate displacement vectors with an accuracy significantly better than 0.5 of a pixel. The image may then be realigned according to the global displacement vector by means of spatial interpolation to sub-pixel accuracy using a method as described, for example, in US-A-5 243 433.

In accordance with one aspect of the present invention, there is provided a method of detecting global translations between two images comprising the steps of:-

a) generating at least one displacement vector using phase correlation techniques indicative of the translation between the two images to pixel accuracy;

b) selecting a single vector which most accurately represents the global translation between the two images;

c) generating a set of matching terms in the spatial domain centred around the selected vector; and

d) interpolating the matching terms to provide detection to sub-pixel accuracy.

Preferably, step b) includes applying a threshold to the at least one displacement vector to provide an indication of suitable vector(s).

The present invention comprises a two-stage, vernier method to generate global displacement vectors to sub-pixel accuracy. The method first generates a vector to pixel accuracy followed by a second step to obtain a fractional correction to the vector.

More specifically, the first stage is the implementation of the phase correlation technique to a number of corresponding sub-blocks of an appropriate size in the pair of images. A set of vectors is obtained from the generated correlation surfaces. This set may comprise all vectors which correspond to peaks of height greater than a pre-specified value or the vectors selected according to some other appropriate measure. Of this set, a single vector is selected which most accurately represents the global displacement to pixel accuracy between the pair of frames.

The second stage comprises the generation of a set of matching terms in the spatial domain, either by cross-correlation or means square error, centred around the global vector. Typically, a measure of 'match' is obtained at five positions only - that of the global vector, and plus or minus one pixel horizontally and vertically. Interpolation of the limited cross-correlation surface, for example, yields the fractional correction to the global vector.

## Advantageous Effect of the Invention

The advantage of the method according to the present invention over those described in the prior art is that it takes advantage of the strengths particular to the phase correlation and the spatial-domain matching techniques, and is comparatively simple to implement in hardware.

As discussed above, phase correlation is extremely robust to noise and independent movement within the scene due to the spiky nature of the correlation surface. Hence vectors can be generated with high confidence - but only to pixel accuracy.

Conversely, the matching techniques such as cross-correlation generate a correlation surface which is smooth and substantially less robust to noise. These techniques can hence be used to generate vectors with higher accuracy but low confidence.

By combining the two methods, using a vector generated by phase correlation to 'point' to the area of interest in a spatial cross-correlation surface, vectors of sub-pixel accuracy may be obtained with a high

degree of confidence.

**Brief Description of the Drawings**

For a better understanding of the present invention, reference will now be made, by way of example only, to the accompanying drawings in which:-

Figure 1 illustrates a block diagram of apparatus for carrying out the method in accordance with the present invention; and

Figure 2 is a block diagram illustrating the various steps in the method according to the present invention.

**Detailed Description of the Invention**

As mentioned above, the present invention can be used to determine displacements or translations between pairs of image frames due to movement from frame to frame which is not due to movement of image detail.

Furthermore, the translation to be measured may be from the colour separations of a single image and then the translation is required to effect the correct alignment of the colour images when the frames are reconstructed to produce a full colour final image.

The details of a preferred implementation of the present invention for each pair of successive frames in sequence, or for a pair of separations from a colour change is as follows:-

1) Store blocks at corresponding positions in the pairs of frames. This may be either five (corners plus centre) or nine (corners, centre edges plus centre) blocks each comprising 64 x 64 pixels.

2) Perform a two-dimensional phase correlation on each corresponding pair of blocks as given in equation (1) below, and take the inverse transform to obtain a correlation surface for each block pair:-

$$\Delta\Phi(u,v) = \frac{F(u,v).G(u,v)^*}{|F(u,v).G(u,v)^*|} \qquad (1)$$

This provides a series of peaks where correlation between the two images is achieved.

3) Threshold each correlation surface at a value corresponding to the minimum value expected for significant peaks (typically around 0.1 to 0.2). This will generally yield a significant vector at only one displacement position. Finally, use a search technique to find the position of the remaining peak (if any) with the greatest value. In blocks where there is very little input signal or most of the block was in independent motion, there may be no remaining peaks.

4) Take the modal value from the resulting vector set (that is, the displacement vector which occurs most frequently). This is the global motion vector to pixel accuracy.

5) To obtain sub-pixel accuracy, a limited cross-correlation stage is performed on either the whole image area (with the exception of the borders) or on the 64 x 64 block(s) (again with the exception of the borders) which generated the modal vector(s) with the maximum amplitude. A 3 x 3 separated correlation is centred on the vector (with horizontal and vertical components ***x,y*** respectively) from the phase correlation stage as follows:-

$$C_{k,l} = \sum_{j=2}^{63}\sum_{i=2}^{63} f_{ij} \cdot g_{(i-k-x),(j-l-y)}$$

for (k,l) = (-1,0);(0,-1);(0,0);(0,1);(1,0)

where ***f,g*** are 64 x 64 blocks in the spatial domain. The sub-pixel adjustments $\delta\boldsymbol{x}$ and $\delta\boldsymbol{y}$ on the vector components x and y are calculated by quadratic interpolation as follows:

$$x+\delta x = x + \frac{C_{1,0}-C_{-1,0}}{2(2C_{0,0}-C_{-1,0}-C_{1,0})}$$

$$y+\delta y = y + \frac{C_{0,1}-C_{0,-1}}{2(2C_{0,0}-C_{0,-1}-C_{0,1})}$$

The result is a single vector ($x+\delta x, y+\delta y$) for each pair of successive frames which corresponds to the sub-pixel displacement between them.

Where displacement vectors are calculated for a sequence of images, calculations for the phase correlation may be reduced by storing the Fourier coefficients from the second frame of each pair for use when that frame becomes the first of the subsequent pair, or alternatively, by storing the Fourier coefficients for some reference frame in the sequence.

Figure 1 illustrates the overall apparatus which can be used to effect correction for global translation. The apparatus comprises an image store 10, a phase correlation device 12, a pair of reference frame stores 14, 16 and a spatial interpolation unit 18.

The reference frame stores 14, 16 respectively store Fourier coefficients and sub-block values derived from a reference frame. This reference frame may be the first frame of a sequence of frames, the subsequent frames being corrected to be in alignment with the first frame.

The spatial interpolation unit 18 operates on the principle as described in US-A-5 243 433 discussed above, to provide the necessary correction.

Once the Fourier coefficients and sub-block values have been stored in the reference frame stores 14, 16, an input image frame to which global translation correction is to be applied is input into the image store 10. The input image is then fed to the phase correlation device 12. Fourier coefficients and sub-block values are input into the device 12 from the stores 14, 16 so that correlation between the reference frame and the input frame can be achieved. After correlation in the phase correlation device 12, an output global displacement vector is obtained which gives the correction which is to be applied to the input image frame in the spatial interpolation unit 18 to compensate for the translation between that input image frame and the reference frame.

The phase correlation device 12 may comprise a VME bus card and FFT/DSP chips programmed to carry out the desired correlation functions.

Figure 2 illustrates the steps of the method in more detail. Components of the apparatus already mentioned are referenced the same.

At the start of any global translation correction, a reference frame is chosen against which all subsequent frames are aligned. The first frame, the reference frame, is input to the frame store 10, and is fed to the phase correlation device 12 indicated by the dotted line in Figure 2. The first step carried out on this frame is the selection of sub-blocks values as shown by box (A). These values are stored in reference frame store 16 (shown in dot-dash lines) and also passed to box (B) where the Fourier coefficients are determined. These coefficients are stored in reference frame store 14 (shown in dot-dash lines). The apparatus is now ready to detect global translation and then provide the global displacement vector for feeding to the spatial interpolation unit 18.

An input image frame to be corrected is input to the frame store 10. As with the reference frame, it is input to the phase correlation device 12 where the sub-blocks are selected in box (A), Fourier transformation of these sub-blocks is carried out in box (B) and then phase correlation of the sub-block pairs is carried out in box (C) using the stored Fourier coefficients from reference frame store 14. This correlation provides a correlation surface with peaks corresponding to correlation between the input image frame and the reference image frame. A threshold is then applied to the correlation surface to determine the peaks, as described previously, in box (D). The modal vector is then determined in box (E) from the peaks determined in box (D) together with the address of the block which generated the modal vector - the modal vector $x,y$ being fed to box (F).

Information from box (E) relating to the block address generating the modal vector is then fed back to box (A) where the sub-blocks are selected and then fed to box (G) where cross-correlation is carried out between the selected sub-blocks corresponding to the block address generating the modal vector and the stored sub-block values from reference frame store 16. Interpolation of the cross-correlation surface is then carried out in box (H) to provide the fractional corrections $\delta x, \delta y$ in box (I) as described previously.

Boxes (F) and (I) are then added together to provide the displacement vector in box (J). This vector is then fed to the spatial interpolation unit 18 together with the input image frame from the frame store 10 to effect correction on the input image.

## Claims

1. A method of detecting global translations between two images comprising the steps of:-
   a) generating at least one displacement vector using phase correlation techniques indicative of the translation between the two images to pixel accuracy;
   b) selecting a single vector which most accurately represents the global translation between the two images;
   c) generating a set of matching terms in the spatial domain centred around the selected vector; and
   d) interpolating the matching terms to provide detection to sub-pixel accuracy.

2. A method according to claim 1, wherein step b) includes applying a threshold to the at least one displacement vector to provide an indication of suitable vector(s).

3. A method according to claim 1 or 2, wherein step b) includes selecting the modal value from the at least one generated displacement vector.

4. A method according to any one of claims 1 to 3, wherein step c) is carried out using cross-correlation techniques.

5. A method according to any one of claims 1 to 3, wherein step c) is carried out using mean square error techniques.

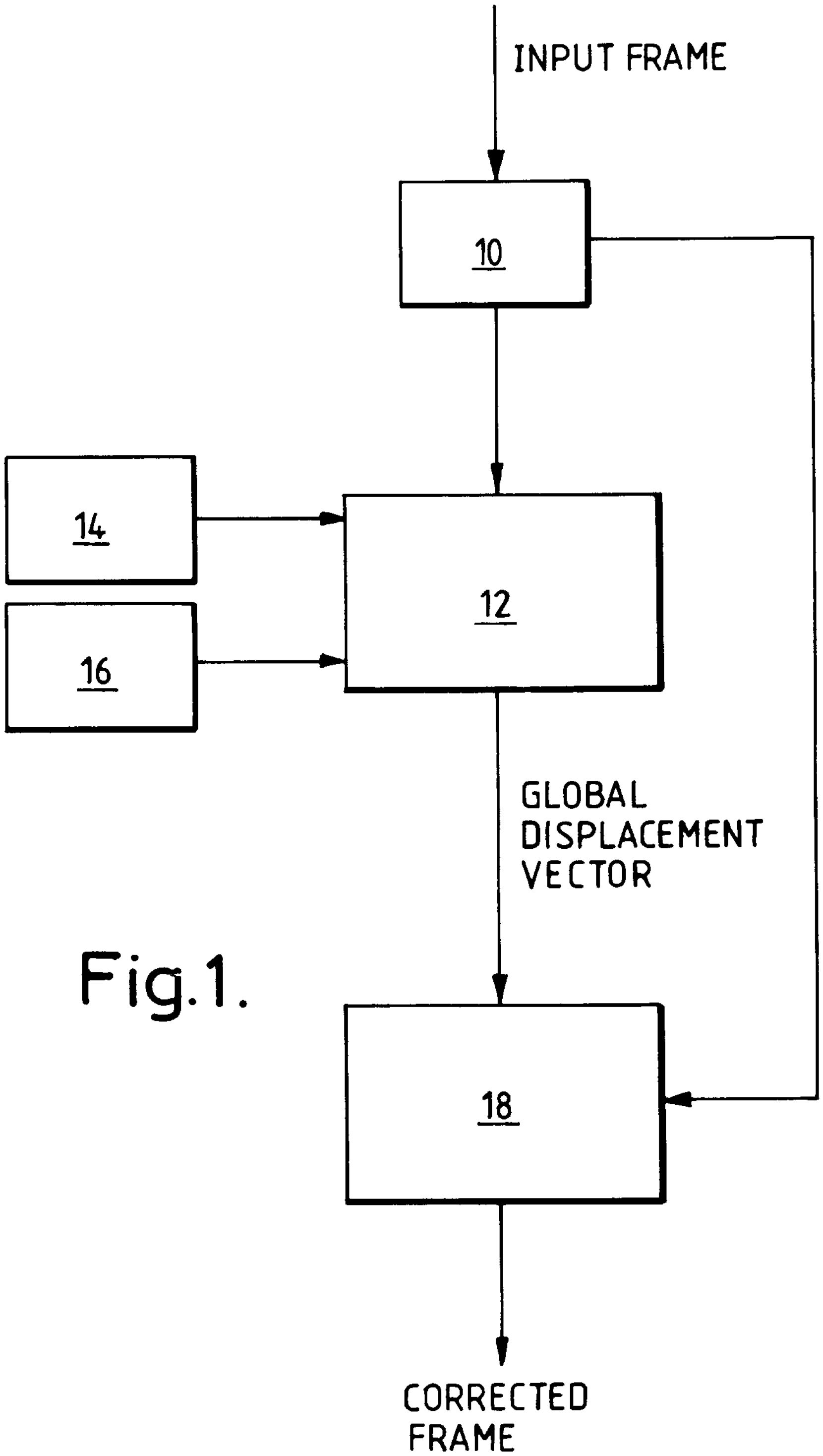
INPUT FRAME
10
14
12
16
GLOBAL DISPLACEMENT VECTOR
18
CORRECTED FRAME

Fig.1.

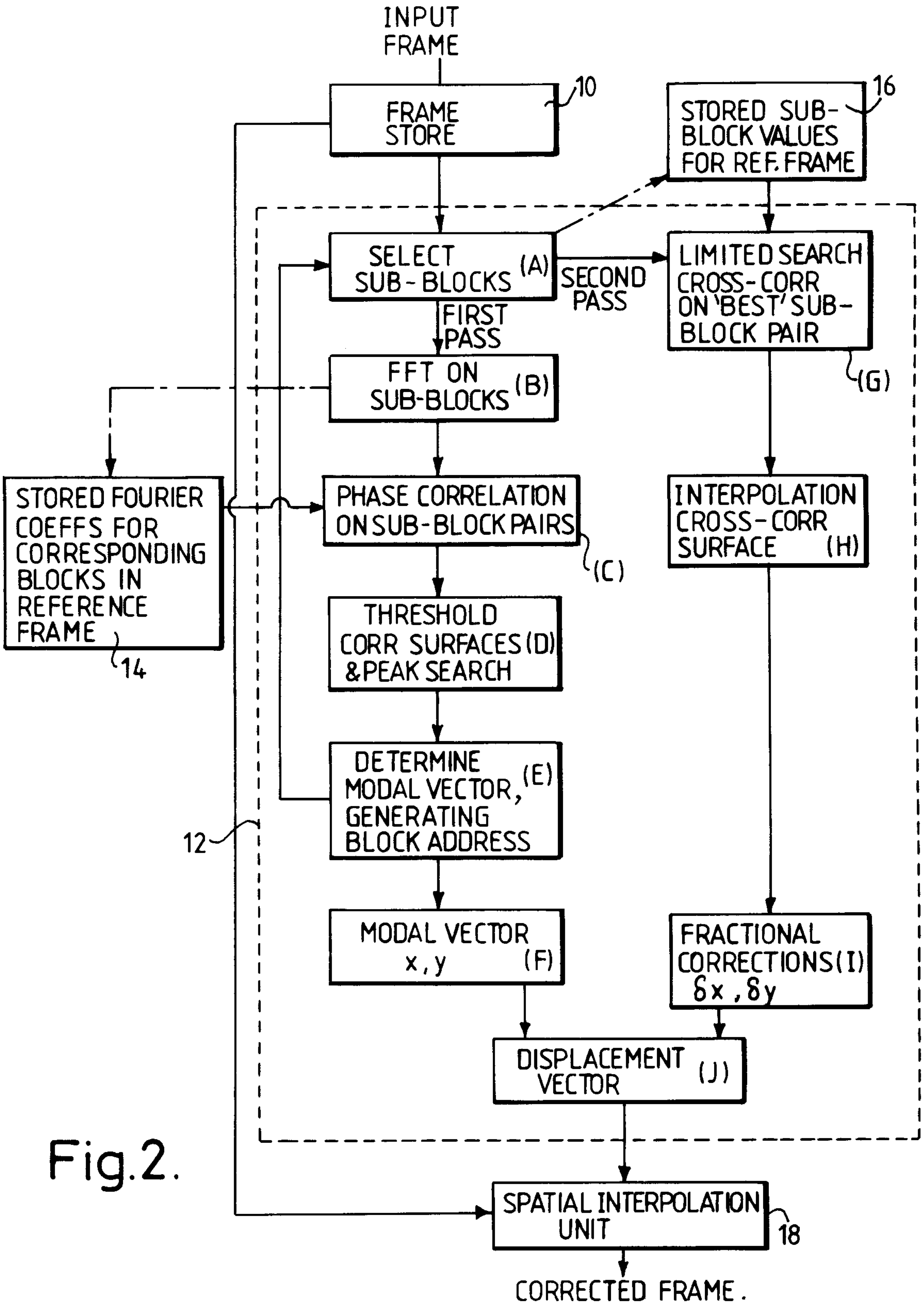

INPUT FRAME
FRAME STORE
10
STORED SUB-BLOCK VALUES FOR REF. FRAME
16
SELECT SUB-BLOCKS (A)
SECOND PASS
LIMITED SEARCH CROSS-CORR ON 'BEST' SUB-BLOCK PAIR
(G)
FIRST PASS
FFT ON SUB-BLOCKS (B)
STORED FOURIER COEFFS FOR CORRESPONDING BLOCKS IN REFERENCE FRAME
14
PHASE CORRELATION ON SUB-BLOCK PAIRS
(C)
INTERPOLATION CROSS-CORR SURFACE (H)
THRESHOLD CORR SURFACES (D) & PEAK SEARCH
DETERMINE MODAL VECTOR, GENERATING BLOCK ADDRESS (E)
12
MODAL VECTOR x, y (F)
FRACTIONAL CORRECTIONS (I) δx, δy
DISPLACEMENT VECTOR (J)
SPATIAL INTERPOLATION UNIT
18
CORRECTED FRAME.


Fig.2.